# EUROPEAN PATENT SPECIFICATION

(11) **EP 2 237 546 B1**
(45) Date of publication and mention of the grant of the patent: **13.05.2020**
(21) Application number: 09156764.4
(22) Date of filing: 30.03.2009
(51) Int. Cl.: H04N 1/32

(54) **Device and process for protecting a digital document, and corresponding process for verifying the authenticity of a printed hardcopy**
Vorrichtung und Verfahren zum Schutz eines digitalen Dokuments und entsprechendes Verfahren zur Prüfung der Authentizität einer gedruckten Hardcopy
Dispositif et processus de protection de document numérique, et processus correspondant pour vérifier l'authenticité d'une copie papier imprimée

(43) Date of publication of application: 06.10.2010
(73) Proprietor: Cipal Schaubroeck NV, BE-2440 GEEL (BE)
(72) Inventor: Bals, Klaas, 2660 Hoboken (BE); Dehond, Guy, 2660 Hoboken (BE); Hofstede, Nick, 2660 Hoboken (BE)
(74) Representative: IP HILLS NV

(56) References cited:
- EP-A- 0 600 646
- EP-A- 0 676 877
- EP-A- 1 432 234
- US-A1- 2005 049 977

## Description

### Field of the Invention

The present invention generally relates to protecting the authenticity of digital copies and hardcopies (analogue copies or printed paper versions) of a document. With an estimated 250.000 cases of official document frauds / year, an estimated one third of all alleged official government documents being false, and an estimated involved community cost of 40.000 euro per falsified document, the need for a highly performing solution that ensures the authenticity of documents that exist both in digital and analogue form has become huge. Examples of documents that are subject to fraud and where there is a need to verify the authenticity of both digital and analogue copies are bank statements, pay slips, government documents, temporary contracts like interim contracts, certificates of origin accompanying international shipments of goods, invoices, certificates used in highly secured environments like defence, nuclear, aerospace, diamonds trade, etc. The overall aim of the present invention is to provide a solution for efficiently protecting the authenticity of digital and analogue copies of documents, to thereby stimulate the use and spreading of certified digital documents while enabling people to print their digital documents through common printers on common paper with common ink with guarantee of the legal value and authenticity of the printed documents.

### Background of the Invention

Although digital documents are cost-effective in generation, multiplication and delivery, paper documents have a long-standing cultural history and are still the preferred medium for record keeping. Producing and distributing paper copies however is more expensive. Paper documents can be replicated by photocopying, and can be distributed in original or photocopied form, e.g. by facsimile or regular mail.

Whereas digital documents can have digital signatures that prove the authenticity, the digital signature is lost when the documents are printed as a consequence of which the authenticity of paper versions can no longer be proven. This results in risk for document forgery or fraud.

Authenticity is an important issue for official documents such as identification cards or passports. Other documents for which resistance to forgery or other tampering is desired, are various certificates, driver's licenses, betting slips, prize or game awards, tickets, bank statements, certificates of origin, payslips, government forms, official documents, customs documents, insurance policies or other documents that simply require validating signatures affixed thereto such as contracts, etc.

Summarizing, it would be highly advantageous for sensitive documents such as negotiable instruments to be able to be generated on demand from a certified digital copy without requiring special paper supplies of pre-printed safety background paper, whilst guaranteeing that the printed document is not falsified or changed.

Various methods have been described in the literature attempting to detect or hinder forgery, counterfeiting or alteration of sensitive documents. The existing prior art solutions that attempt to tackle the above overall problem however do not work properly or - in case they do work - lack efficiency, i.e. they are time consuming and/or require the inclusion of lengthy codes visually applied on the printed documents. The closest prior art solutions known and their respective shortcomings are discussed in the following paragraphs.

US Patent Application No. 2006/0271787 A1 (DeYoung et al.) entitled "System and Method for Validating a Hard-Copy Document Against an Electronic Version" describes a method for verifying the authenticity of a hardcopy through affixing a unique code named "digital signature" in US 2006/0271787 A1 to the document. The "digital signature" may for instance be a 2-D barcode or Glossmarks™ as indicated in [0028] of US 2006/0271787 A1. In the unique code, a message digest of the document is encoded. This message digest is generated using a one-way hash algorithm on document contents as is specified in [0015] of US 2006/0271787 A1. Verification of the authenticity of a hardcopy of the document requires scanning the hardcopy and reproducing the hash or message digest from the scanned document. The reproduced hash can then be compared with the message digest or hash that is obtained through decoding the 2-D barcode or "digital signature" to detect fraud.

A major problem with US 2006/0271787 A1 is that the scanned hardcopy in general does not allow reproduction of the hash. As a result of the limited scan resolution, random scanner noise, specks or little blobs resulting from dirt, etc., the scanned hardcopy will differ from the hardcopy and consequently also from the original digital document. Even a minor difference in the scanned hardcopy will result in a significantly differing hash as a result of which the authentication test will fail, even if the document was not tampered with.

An equivalent prior art solution wherein a hash (message digest 24) of document data (message 20) is encoded in a machine readable way (digital signature 30) and printed onto the document to enable verification of the hardcopy's authenticity is described in US Patent Application No. 2006/0265590 A1 entitled "Digital Signature/Certificate for Hard-Copy Documents" and mentioning the same co-inventor DeYoung. As is illustrated in Fig. 1 and Fig. 3 of US 2006/0265590 A1, verification of the authenticity requires scanning the hardcopy and obtaining the hash from the scanned document for comparison with the hash encoded in the digital signature. The scanned document however will contain noise specks and blemishes resulting from dirt, scanning and printing defects, as a result of which the hash cannot be reproduced and no or few documents will pass the authentication test successfully. Additionally, when relying on extracted text or other data instead of the scanned image directly, this method is only feasible when the document is created following strict rules. For example, optical character recognition (OCR) with the required perfect level of accuracy is only feasible with large enough fonts, and a suited typeface. Other data extraction methods known in the art have similar drawbacks.

Also in US 6,081,610 A *entitled "System and Method for Verifying Signatures on Documents",* only a signed hash is included in the two dimensional code (e.g. barcode) that is recorded on the document. Different scanner equipment, slightly different placement of the document beneath the scanner, creases in the document, etc. may all lead to a completely different hash being reproduced from the scanned document such that the authenticity of the document can no longer be verified.

In another prior art solution, known from *Xerox Corporation's* US Patent 7,197,644 B2 *with title "Systems and Methods for Providing Hardcopy Secure Documents and for Validation of such Documents" or its counterpart European Patent Application* EP 1 432 234 A1, a template is used to select an image segment for instance on checks or bank notes. The image segment and the template are optionally encrypted (Col. 3, lines 30-35) and thereafter encoded into for instance a holographic code, magnetic stripe code, high-density barcode, microdot code, data glyph code, etc. (Col. 11, lines 26-38). In the validation process described in column 2, lines 50-67 of US 7,197,644, the printed document containing the encoded image signature and image signature template is scanned. The image signature and image signature template are obtained through decoding (and optional decryption). The scanned document is further subject to processing according to the image signature template in order to identify therein the image segment for comparison with the image segment in the decoded image signature.

Although the method of US 7,197,644 B2 does not have to reproduce a hash from scanned documents like US 2006/0265590 A1 and therefore could work, it only optionally encrypts the image segment. Asymmetrically encrypting the image segment, as is optionally suggested in US 7,197,644 B2, has the disadvantage that this is very time consuming and inefficient.

Additional drawbacks of US 7,197,644 B2 include the fact that image data, i.e. a subset of the original document's bitmap representation, must be used for generating the code. As a result, the generated code will be lengthy.

Yet another drawback of US 7,197,644 B2 is that it requires the image template to be encoded in the code. The image template may for instance be a rectilinear stripe, a curved stripe, a checkerboard pattern, and the like. The requirement to integrate the template in the code will further increase the length of the code and will contribute to the complexity of the system.

Yet another prior art solution is known from IBM and described in *European Patent Application* EP 0 676 877 *entitled "Method and apparatus for authentication and verification of printed documents using digital signatures and authentication codes".* The method known from IBM suffers from the drawbacks of the above cited DeYoung prior art (scanning introduces defects as a result of which verification of the authenticity fails) and the additional drawback of the above cited Xerox prior art for figurative segments (lengthy codes are generated). Although the problem of the limited scan resolution, scanner noise, specks, etc. is recognized by IBM and a solution to cope with this problem is proposed, the IBM method remains complex and error sensitive as will be explained in the following paragraphs.

The IBM method for authenticating a document starts from an original paper document that is scanned using a conventional scanner (step 1 on page 4, lines 7-8). In the IBM method, the scanned paper document is then segmented (step 2 on page 4, lines 9-11) in such a way that different segments contain different types of data, e.g. a text section, a table section, an image section, etc., each section being subject to a different set of rules. The set of rules is used to repair the scanned data, to generate segment hashes, and to generate a document hash (steps 3-4 on page 4, lines 12-16). Next, a digital signature is received (private key of a private/public key pair in step 6 on page 4, lines 19-20). For authentication purposes, an authentication code is then generated and printed on the document. This authentication code contains the digital signature, the segment hashes and document hash, the repair rules for each of the segments and a digital form of each segment (step 7 on page 4, lines 21-22). The digital form is also generated in step 3 by applying the set of rules. This set of rules depends on the type of segment, e.g. "Text", "Letterhead", "logo", "Diagram", "Table" or "Signature". These rules attempt to repair the scanned data (see page 6, lines 7-36) for generation of the digital form and hash.

The verification process of IBM requires scanning the paper document, extracting the segment hashes and document hash from the scanned document and comparing these hashes with segment hashes and a document hash that are generated from the scanned document. In order to avoid errors through scanning, the IBM method foresees also in the verification process an intermediate step wherein the scanned data are repaired, using the same set of rules. The reparation is done manually by the user that corrects spelling or context errors, or may be done semiautomatically by ignoring line feeds, replacing a series of spaces with a single space, etc. (see page 6, lines 12-18 of EP 0 676 877). The repaired data are then authenticated with a better chance for successful authentication in case of a valid document then with DeYoung's method.

As a result of the scanning and segmentation, the authentication process known from EP 0 676 877 cannot be automated and errors are introduced in the first step. The scanning is a manual step that introduces scan errors. Also the segmentation is a manual step typically performed using a conventional editor and mouse (see page 4, lines 9-12). Although the possibility of automated segment recognition is not excluded (see page 5, lines 44-47) this step in general is performed by the user and also prevents the process known from EP 0 676 877 from being fully automated. Moreover, the segmentation introduces further risks for errors. The segmentation is a rather complex step that requires the signing authority to select data of a single type and to associate a set of rules therewith using a conventional editor and input device. Although the method foresees a solution to manually or semiautomatically cope with scanning errors by applying a set of repair rules to the segments, the method remains error-prone.

The IBM method enables to authenticate paper documents only and deals with the specific problems resulting from paper documents. The IBM method starts from paper (110 in Fig. 1) and produces paper (165 in Fig. 1). There is no teaching in EP 0 676 877 how the IBM method should be adapted to efficiently authenticate original digital documents. A straightforward manner of authenticating an original digital document would be to print a paper version of the digital document and feed the paper version to the apparatus 100 described by IBM in EP 0,676,877, leaving the skilled person with a process that cannot be automatized. Another straightforward manner of authenticating an original digital document would be to remove the scanner 125 from IBM's apparatus 100, still leaving the skilled person with a complex process that involves manual or semi-manual segmentation, and lengthy codes including sets of rules.

It is an objective of the present invention to disclose a device and process for generating documents and a corresponding process for verifying the authenticity of documents, that resolves the above described shortcomings of the prior art solutions. More particularly, it is an objective to present a device and process that enables to efficiently authenticate digital and analogue copies of original digital documents without having to reproduce a hash starting from a scanned document.

### Summary of the Invention

According to the present invention, the above identified objectives are realized by the device for protecting an original digital document defined by claim 1, the device comprising:
- document receiving means for receiving an original digital document;
- associated data receiving means for receiving associated data comprising at least partially data visible on the original digital document;
- hashing means for creating a hash of the associated data;
- digital signature means for asymmetrically encrypting the hash with a private key to thereby generate digitally signed data;
- encoding means for generating a machine-readable code containing the asymmetrically encrypted hash to therewith sign at least a portion of data in the original digital document, the encoding means being adapted to encode in the machine-readable code also the associated data such that the hash can be reproduced from decoded associated data in a machine-readable code of a printed hardcopy of the original digital document and serve for comparison with the encrypted hash encoded in the machine-readable code of the printed hardcopy to verify authenticity of the decoded associated data, and the machine-readable code enables verification of the authenticity of the printed hardcopy of the original digital document through comparison of data in the printed hardcopy with the associated data decoded from the machine-readable code and verified; and
- recording means for recording the machine-readable code onto a protected digital version of the original digital document.

Indeed, by encoding in the machine-readable code both the associated data and an encrypted hash of the associated data, verifying the authenticity no longer requires reproduction of the hash from the scanned hardcopy. Since the associated data itself is part of the machine-readable code, the hash can be reproduced from the decoded associated data and serve for comparison with the encrypted hash encoded in the machine-readable code. In addition, relevant data in the printed hardcopy may be compared with the associated, verified data decoded from the machine-readable code. The efficiency and performance is improved because not all data in the document is encrypted. A digital signature is obtained through asymmetrically encrypting only the hash with a private key.

In addition to a device for protecting an original digital document as defined by claim 1, the present invention relates to a corresponding process for protecting an original digital document as defined by claim 8, the process comprising the following steps:
- receiving an original digital document;
- receiving associated data comprising at least partially data visible on the original digital document;
- creating a hash of the associated data;
- asymmetrically encrypting the hash with a private key to thereby generate digitally signed data;
- generating a machine-readable code containing the asymmetrically encrypted hash to therewith sign at least a portion of data in the digital document, and containing also the associated data such that the hash can be reproduced from decoded associated data in a machine-readable code of a printed hardcopy of the original digital document and serve for comparison with the encrypted hash encoded in the machine-readable code of the printed hardcopy to verify authenticity of the decoded associated data, and the machine-readable code enables verification of the authenticity of the printed hardcopy of the original digital document through comparison of data in the printed hardcopy with the associated data decoded from the machine-readable code and verified.
- recording the machine-readable code onto a protected digital version of the original digital document;

The present invention further also relates to a corresponding process for verifying authenticity of a printed hardcopy of an original digital document as defined by claim 9, the process comprising:
- receiving a printed hardcopy of the original digital document containing a machine-readable code wherein an asymmetrically encrypted hash of associated data of the original digital document and the associated data itself is encoded, the associated data comprising at least partially data visible on the original digital document;
- machine-reading the printed hardcopy;
- decoding the associated data from the machine-readable code;
- verifying whether the associated data is authentic by reproducing the hash from the associated data decoded from the machine-readable code and comparing the hash reproduced with the encrypted hash encoded in the machine-readable code, and to thereby obtain verified associated data decoded from the machine-readable code in case of a match between the hash reproduced and the encrypted hash encoded in the machine-readable code; and
- comparing the verified associated data decoded from the machine-readable code with data extracted from the printed hardcopy of the document to thereby authenticate the printed hardcopy in case of a match between the verified associated data decoded from the machine-readable code and the data extracted from the printed hardcopy.

Thus, verifying the authenticity of a hardcopy of the digital document in its most simple form consists in comparing relevant data in the printed hardcopy with the verified associated data that are decoded from the machine-readable code in the protected version of the digital document.

In order to verify that the associated data decoded from the machine-readable code is authentic, the hash of the associated data must be reproduced from the decoded associated data and this reproduced hash must be compared with the hash decoded from the machine-readable code after being decrypted with the public key linked to the signer's private key. This is defined by claim 10.

According to a further innovative aspect of the invention, defined by claim 2, the encoding means in the device for protecting an original digital document according to the current invention are further adapted for encoding in the machine-readable code also a reference to a public key or associated certificate.

Indeed, in the verification process, the hash of the associated data that is encoded in the machine-readable representation must be decoded and decrypted using the public key that corresponds with the private key used in the document protection process. This public key preferably will be obtained via a reference encoded in the machine-readable code.

As is indicated by claim 3, the machine-readable representation in different embodiments of the device and process according to the present invention may be a barcode, a 2D barcode, a holographic code, a magnetic stripe, a data glyph code, a microdot code, a serpentine code, a watermark, an RFID tag, a URL, an alphanumeric sequence readable using OCR, a magnetic ink code, or a combination of the foregoing. The code may be coloured in order to increase the data density. Alternatively a human-invisible code may be used.

Further optionally, as specified by claim 4, the data extracted from the original digital document for integration in the machine-readable code may for instance be data provided alongside the digital representation of the document, may be data extracted from a digital representation of the document by looking for markers, may be data extracted from a digital representation of the document by looking at predefined positions in the original digital document, or a combination of the foregoing.

As is indicated by respectively claim 5 and claim 6, the device for protecting a digital document according to the present invention may be integrated in a document generating software application like Microsoft Word, or may be integrated in a printer driver.

Further optionally, as is indicated by claim 7, the device and process according to the invention may comprise one or more of the following:
- means for encoding in the machine-readable code a time stamp;
- means for encoding in the machine-readable code a reference indicative for how the associated data has to be presented to a user;
- means for encoding in the machine-readable code data not present in human-readable form in the original digital document;
- means for encoding in the machine-readable code unsigned data such as a reference to the original digital document;
- means for encoding in the machine-readable code a required level of matching before a hardcopy is deemed authentic;
- means for encoding in the machine-readable code information indicative for operations that have been applied to the associated data like compression and encoding needed to verify the associated data;
- means for encoding in the machine-readable code the digital signature of the original digital document.

As is indicated by claim 11, the verification process according to the present invention may make use of a desktop scanner, a photo camera, a bar code scanner, or any alternative document reading hardware and/or software solution.

In the process for verifying authenticity of a printed hardcopy according to the present invention, the differences between the associated data decoded from the machine-readable code and data extracted from the printed hardcopy may optionally be shown to the user. This is specified by claim 12.

Also optionally, a corroboration level between the associated data decoded from the machine-readable code and data extracted from the printed hardcopy may be shown to the user. This optional aspect is defined by claim 13.

In a possible implementation of the process for verifying authenticity of a printed hardcopy according to the present invention, an operator may be involved as is indicated by claim 14. Questions concerning the digital document may be asked to an operator and the received answers may be verified against the associated data decoded and verified from said machine-readable code in order to validate the hardcopy.

Yet another option of the verification process according to the present invention involves generating an authenticity score from the comparison between the associated data decoded from the machine-readable code and the data extracted from said printed hardcopy of said document. The authenticity score may be presented to the user. This optional aspect is described in claim 15.

### Brief Description of the Drawings

Fig. 1 illustrates an embodiment of the process and device for protecting a digital document according to the present invention; and
Fig. 2 illustrates an embodiment of the corresponding process for verifying authenticity of a printed hardcopy of the digital document.

### Detailed Description of Embodiment(s)

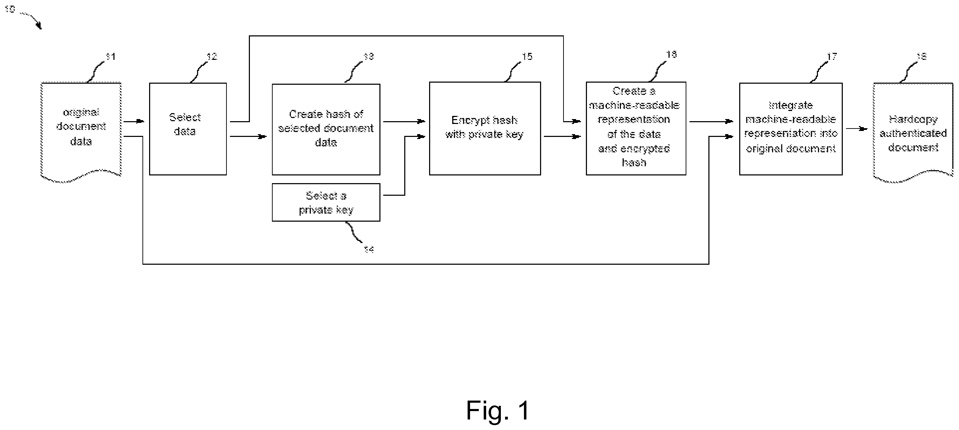

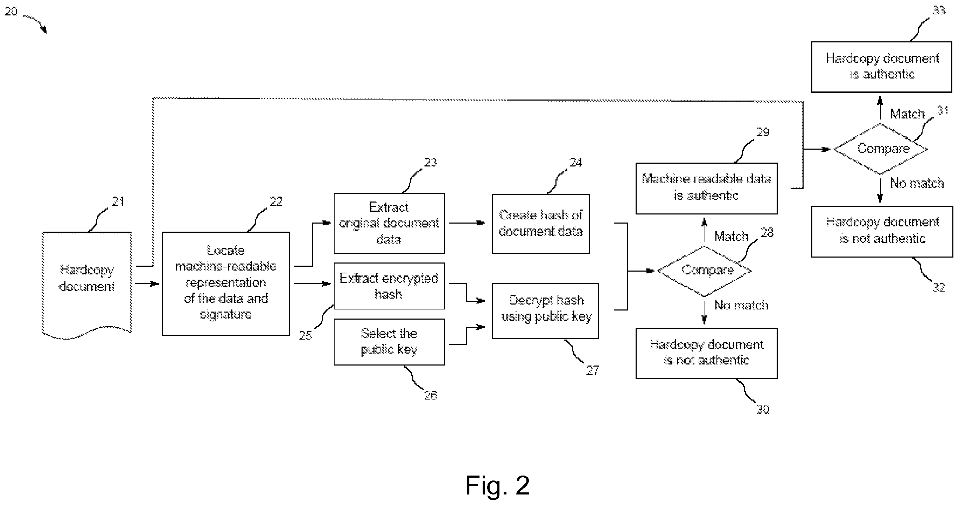

Fig. 1 illustrates a process 10 incorporating the steps for protecting a digital document 11. The original digital document 11 is provided in step 12 to a device, i.e. either hardware or software that selects relevant data in the document 11. Typically, the document will be searched for relevant text on specific positions in the document 11. In a more generic embodiment, associated data may be received together with the original document 11 as input to the process. The associated data in that case at least includes a portion of the data contained in the document 11. In step 13, a hash is generated from the selected or associated data through a specified hash function. In step 15, this hash is digitally signed with a private key that is selected in step 14. The digital signature hence involves an asymmetric encryption algorithm based on a private/public key pair. The public key which is needed in the verification process illustrated by Fig. 2 may have a certificate associated with it or is otherwise trusted.

In step 16, both the selected data and the digitally signed hash are encoded in a machine-readable representation. The machine-readable representation, also named IntelliStamp™, may for instance be a barcode, a 2D barcode, a holographic code, a magnetic stripe, a data glyph code, a microdot code, a serpentine code, a watermark, an RFID tag, a URL, an alphanumeric sequence readable using OCR, a magnetic ink code, etc., or a combination of the foregoing. The machine-readable code may be coloured to increase the data density, or may alternatively be invisible to the user.

The data selected and encoded in the machine-readable representation may be encoded such that it only contains human-readable ASCII characters after decoding. Multiple machine-readable representations may be placed on the document in order to store and encode more information in the code(s). Also, the data may be recorded redundantly in the machine-readable code(s). Thus, multiple machine-readable representations containing the same data or partially overlapping data may be placed on the document in order to improve the chances for recovery of data from a damaged document.

In step 17, the machine-readable representation is recorded into the original document. The recording or integration of the machine-readable code may be performed by a specific system, or by a system integrated into the document generation software or printer driver software generating a digital version of the document containing the machine-readable code.

Any hardcopy of the document that is generated in step 18 shall contain the machine-readable code such that the authenticity of the hardcopy can be verified through a device or process as illustrated by Fig. 2.

Fig. 2 illustrates a method 20 incorporating steps for validating the authenticity of a hardcopy document 21 generated by the method illustrated by Fig. 1. In step 22, the hardcopy is provided to an apparatus recognizing, capturing and digitizing machine-readable representations on the hardcopy document in order to provide encoded information. The apparatus that reads the hardcopy document in step 22, more particularly the machine-readable code(s) therein, could for instance be a desktop scanner, a photo camera, a bar code scanner, etc.

In step 23, the original associated data that was encoded in the machine-readable code(s), are extracted there from through decoding and the decoded associated data are subject in step 24 to the predefined hash algorithm in order to reproduce the hash of the decoded associated data.

In steps 25, 26 and 27, the hash of the associated data that was encoded in the machine-readable representation is decoded there from and is decrypted using the public key that corresponds with the private key used in the process illustrated by Fig. 1. This public key may for instance be obtained in step 26 directly from the signer, from a trusted third party and/or may come with an associated certificate.

The hash decoded and decrypted from the machine-readable representation is compared with the hash reproduced from the decoded associated data in step 28. In case there is no match, the decoded machine-readable associated data is not authentic as is indicated by step 30 and consequently the hardcopy 21 is not authentic. When there is a match, the decoded machine-readable data is authentic as is indicated by step 29.

In case the decoded machine-readable associated data is authentic, it will be compared, either automatically or by an operator, in step 31 with data extracted from hardcopy document 21 itself. The comparison will lead to the conclusion that the hardcopy document 21 is authentic in step 33 in case of a match, or lead to the conclusion that the hardcopy document 21 is not authentic in step 32 in case there is no match.

Optionally, the differences between the data extracted from the hardcopy document 21 and the decoded machine-readable associated data may be shown to the operator, as well as a corroboration level between them. As a result of the comparison, an authenticity score or fractional authenticity score may be calculated and shared with the user. The verification in step 31 may involve an operator who is asked questions about the document 21. The answers of the operator may then be compared with the associated data decoded from the machine-readable representation. The operator may also be asked to compare the associated data decoded from the machine-readable representation with the information visible on the hardcopy document.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device for protecting an original digital document, said device comprising:
- document receiving means for receiving (11) said original digital document;
- associated data receiving means for receiving (12) associated data comprising at least partially data visible on said original digital document;
- hashing means for creating (13) a hash of said associated data;
- digital signature means for asymmetrically encrypting (15) said hash with a private key to thereby generate digitally signed data;
- encoding means for generating (16) a machine-readable code containing said asymmetrically encrypted hash to therewith sign at least a portion of data in said digital document, said encoding means being adapted to encode in said machine-readable code also said associated data such that said hash can be reproduced from decoded associated data in a machine-readable code of a printed hardcopy (21) of said original digital document and serve for comparison with the encrypted hash encoded in said machine-readable code of said printed hardcopy (21) to verify authenticity of said decoded associated data, and said machine-readable code enables verification of the authenticity of said printed hardcopy (21) of said original digital document through comparison (31) of data in said printed hardcopy with said associated data decoded (23) from said machine-readable code and verified (24-30);
- recording means for recording (17) said machine-readable code onto a protected digital version of said original digital document.

2. A device for protecting an original digital document according to claim 1, wherein said encoding means are further adapted for encoding in said machine-readable code a reference to a public key or associated certificate.

3. A device for protecting an original digital document according to claim 1, **CHARACTERIZED IN THAT** said machine-readable code is one or more of:
- a barcode;
- a 2D barcode;
- a holographic code;
- a magnetic stripe;
- a data glyph code;
- a microdot code;
- a serpentine code;
- a watermark;
- an RFID tag;
- a URL;
- an alphanumeric sequence readable using OCR;
- a magnetic ink code;
- a coloured code;
- a human-invisible code.

4. A device for protecting an original digital document according to claim 1, **CHARACTERIZED IN THAT** said data extracted from said original digital document comprises one or more of:
- data alongside said original digital document;
- data identified by markers in said original digital document;
- data at a predefined position in said original digital document.

5. A device for protecting an original digital document according to claim 1, **CHARACTERIZED IN THAT** said device is integrated in a document generating software application.

6. A device for protecting an original digital document according to claim 1, **CHARACTERIZED IN THAT** said device is integrated in a printer driver.

7. A device for protecting an original digital document according to claim 1, **CHARACTERIZED IN THAT** said device further comprises one or more of the following:
- means for encoding in said machine-readable code a time stamp;
- means for encoding in said machine-readable code a reference indicative for how said associated data have to be presented to a user;
- means for encoding in said machine-readable code data not present in human-readable form in said original digital document;
- means for encoding in said machine-readable code unsigned data such as a reference to said original digital document;
- means for encoding in said machine-readable code a required level of matching before a hardcopy is deemed authentic;
- means for encoding in said machine-readable code information indicative for operations that have been applied to said associated data like compression and encoding needed to verify said associated data;
- means for encoding in the machine-readable code the digital signature of the original digital document.

8. A process for protecting an original digital document, said process comprising:
- receiving (11) said original digital document;
- receiving (12) associated data comprising at least partially data visible on said original digital document;
- creating (13) a hash of said associated data;
- asymmetrically encrypting (15) said hash with a private key to thereby generate digitally signed data;
- generating (16) a machine-readable code containing said asymmetrically encrypted hash to therewith sign at least a portion of data in said original digital document and containing also said associated data such that said hash can be reproduced from decoded associated data in a machine-readable code of a printed hardcopy (21) of said original digital document and serve for comparison with the encrypted hash encoded in said machine-readable code of said printed hardcopy (21) to verify authenticity of said decoded associated data, and said machine-readable code enables verification of the authenticity of said printed hardcopy (21) of said original digital document through comparison of data in said printed hardcopy (21) with said associated data decoded from said machine-readable code and verified; and
- recording (17) said machine-readable code onto a protected digital version of said original digital document.

9. A process for verifying authenticity of a printed hardcopy of an original digital document,
said process comprising:
- receiving (21) a printed hardcopy of said original digital document containing a machine-readable code wherein an asymmetrically encrypted hash of associated data of the original digital document and said associated data are encoded, said associated data comprising at least partially data visible on said original digital document;
- machine-reading (22) said printed hardcopy;
- decoding (23) said associated data from said machine-readable code; and
- verifying (24-30) whether said associated data is authentic by reproducing said hash from said associated data decoded from said machine-readable code and comparing said hash reproduced with said encrypted hash encoded in said machine-readable code, and to thereby obtain verified associated data decoded from said machine-readable code in case of a match between said hash reproduced and said encrypted hash encoded in said machine-readable code;
- comparing (31) said verified associated data decoded from said machine-readable code with data extracted from said printed hardcopy of said document to thereby authenticate said printed hardcopy in case of a match between said verified associated data decoded from said machine-readable code and said data extracted from said printed hardcopy.

10. A process for verifying authenticity of a printed hardcopy of an original digital document according to claim 9,
**CHARACTERIZED IN THAT** said step of verifying (24-30) whether said associated data is authentic comprises:
- decoding (25) said asymmetrically encrypted hash of said associated data from said machine-readable code to thereby obtain a decoded asymmetrically encrypted hash;
- decrypting (26-27) said decoded asymmetrically encrypted hash with a public key associated with the signers private key to thereby obtain a decrypted hash;
- generating (24) a hash from said associated data decoded from said machine-readable code; and
- comparing (28) said decrypted hash with said hash generated from said associated data decoded from said machine-readable code to thereby verify authenticity of said associated data decoded from said machine-readable code.

11. A process for verifying authenticity of a printed hardcopy of an original digital document according to claim 9,
**CHARACTERIZED IN THAT** machine reading said printed hardcopy is done using one of the following:
- a desktop scanner;
- a photo camera;
- a bar code scanner.

12. A process for verifying authenticity of a printed hardcopy of an original digital document according to claim 9,
**CHARACTERIZED IN THAT** said process further comprises:
- showing differences between said associated data decoded from said machine-readable code and data extracted from said printed hardcopy of said original digital document.

13. A process for verifying authenticity of a printed hardcopy of an original digital document according to claim 12,
**CHARACTERIZED IN THAT** said process further comprises:
- determining and showing a corroboration level between said associated data decoded from said machine-readable code and data extracted from said printed hardcopy of said original digital document.

14. A process for verifying authenticity of a printed hardcopy of an original digital document according to claim 9,
**CHARACTERIZED IN THAT** said process further comprises:
- asking questions concerning said original digital document to an operator;
- receiving answers to said questions from said operator; and
- verifying said answers against said associated data decoded from said machine-readable code.

15. A process for verifying authenticity of a printed hardcopy of an original digital document according to claim 9,
**CHARACTERIZED IN THAT** said process further comprises:
- generating an authenticity score from the comparison between said associated data decoded from said machine-readable code and said data extracted from said printed hardcopy of said original digital document.

## Patentansprüche

1. Einheit zum Schützen eines ursprünglichen digitalen Dokuments, wobei die Einheit aufweist:
- Dokument-Empfangsmittel zum Empfangen (11) des ursprünglichen digitalen Dokuments;
- zugehörige Daten-Empfangsmittel zum Empfangen (12) zugehöriger Daten, die zumindest teilweise Daten aufweisen, die auf dem ursprünglichen digitalen Dokument sichtbar sind;
- Hash-Mittel zum Erstellen (13) eines Hash der zugehörigen Daten;
- digitale Signaturmittel zum asymmetrischen Verschlüsseln (15) des Hash mit einem privaten Schlüssel, um dadurch digital signierte Daten zu generieren;
- Encodiermittel zum Generieren (16) eines maschinenlesbaren Codes, der den asymmetrisch verschlüsselten Hash enthält, um damit zumindest einen Abschnitt von Daten in dem digitalen Dokument zu signieren, wobei die Encodiermittel angepasst sind, um in dem maschinenlesbaren Code auch die zugehörigen Daten zu encodieren, sodass der Hash aus decodierten zugehörigen Daten in einem maschinenlesbaren Code einer gedruckten Hardcopy (21) des ursprünglichen digitalen Dokuments reproduziert werden und zum Vergleich mit den verschlüsselten Hash dienen kann, der in dem maschinenlesbaren Code der gedruckten Hardcopy (21) encodiert ist, um die Authentizität der decodierten zugehörigen Daten zu prüfen, und der maschinenlesbare Code ermöglicht eine Überprüfung der Authentizität der gedruckten Hardcopy (21) des ursprünglichen digitalen Dokuments durch einen Vergleich (31) von Daten in der gedruckten Hardcopy mit den zugehörigen aus dem maschinenlesbaren Code decodierten (23) und überprüften (24 bis 30) Daten;
- Aufzeichnungsmittel zum Aufzeichnen (17) des maschinenlesbaren Codes auf einer geschützten digitalen Version des ursprünglichen digitalen Dokuments.

2. Einheit zum Schützen eines ursprünglichen digitalen Dokuments nach Anspruch 1, wobei die Encodiermittel ferner angepasst sind, um in dem maschinenlesbaren Code einen Verweis auf einen öffentlichen Schlüssel oder ein zugehöriges Zertifikat zu encodieren.

3. Einheit zum Schützen eines ursprünglichen digitalen Dokuments nach Anspruch 1, **DADURCH GEKENNZEICHNET, DASS** der maschinenlesbare Code einer oder mehrere ist von:
- einem Strichcode;
- einem 2D-Strichcode;
- einem holografischen Code;
- einem Magnetstreifen;
- einem Datenzeichencode;
- einem Mikropunktcode;
- einem gewundenen Code;
- einem Wasserzeichen;
- einem RFID-Tag;
- einem URL;
- einer alphanumerischen Sequenz, lesbar unter Verwendung von OCR;
- einem Magnettintencode;
- einem Farbcode;
- einem für Menschen nicht sichtbaren Code.

4. Einheit zum Schützen eines ursprünglichen digitalen Dokuments nach Anspruch 1, **DADURCH GEKENNZEICHNET, DASS** die aus dem ursprünglichen digitalen Dokument extrahierten Daten eines oder mehreres aufweisen von:
- Daten neben dem ursprünglichen digitalen Dokument;
- durch Marker in dem ursprünglichen digitalen Dokument identifizierte Daten;
- Daten an einer vordefinierten Position in dem ursprünglichen digitalen Dokument.

5. Einheit zum Schützen eines ursprünglichen digitalen Dokuments nach Anspruch 1, **DADURCH GEKENNZEICHNET, DASS** die Einheit in eine Software-Anwendung zur Dokumentgenerierung integriert ist.

6. Einheit zum Schützen eines ursprünglichen digitalen Dokuments nach Anspruch 1, **DADURCH GEKENNZEICHNET, DASS** die Einheit in einen Druckertreiber integriert ist.

7. Einheit zum Schützen eines ursprünglichen digitalen Dokuments nach Anspruch 1, **DADURCH GEKENNZEICHNET, DASS** die Einheit ferner eines oder mehreres von Folgendem aufweist:
- Mittel zum Encodieren eines Zeitstempels in dem maschinenlesbaren Code;
- Mittel zum Encodieren einer Referenz, die dafür indikativ ist, wie zugehörige Daten einem Benutzer angezeigt werden müssen, in dem maschinenlesbaren Code;
- Mittel zum Encodieren von Daten, die nicht in einer von Menschen lesbaren Form in dem ursprünglichen digitalen Dokument vorhanden sind, in dem maschinenlesbaren Code;
- Mittel zum Encodieren von unsignierten Daten, wie beispielsweise eine Referenz auf das ursprüngliche digitale Dokument, in dem maschinenlesbaren Code;
- Mittel zum Encodieren eines erforderlichen Übereinstimmungsgrads, bevor eine Hardcopy als authentisch eingestuft wird, in dem maschinenlesbaren Code;
- Mittel zum Encodieren von Informationen, die indikativ für Operationen sind, die auf die zugehörigen Daten angewendet wurden, wie beispielsweise eine zum Überprüfen der zugehörigen Daten notwendige Komprimierung und Encodierung, in dem maschinenlesbaren Code;
- Mittel zum Encodieren der digitalen Signatur des ursprünglichen digitalen Dokuments in dem maschinenlesbaren Code.

8. Prozess zum Schützen eines ursprünglichen digitalen Dokuments, wobei der Prozess aufweist:
- ein Empfangen (11) des ursprünglichen digitalen Dokuments;
- ein Empfangen (12) von zugehörigen Daten, die zumindest teilweise Daten aufweisen, die auf dem ursprünglichen digitalen Dokument sichtbar sind;
- ein Erstellen (13) eines Hash der zugehörigen Daten;
- ein asymmetrisches Verschlüsseln (15) des Hash mit einem privaten Schlüssel, um dadurch digital signierte Daten zu generieren;
- ein Generieren (16) eines maschinenlesbaren Codes, der den asymmetrisch verschlüsselten Hash enthält, um damit zumindest einen Abschnitt von Daten in dem ursprünglichen digitalen Dokument zu signieren und der auch die zugehörigen Daten enthält, sodass der Hash aus decodierten zugehörigen Daten in einem maschinenlesbaren Code einer gedruckten Hardcopy (21) des ursprünglichen digitalen Dokuments reproduziert werden und zum Vergleich mit dem verschlüsselten Hash dienen kann, der in dem maschinenlesbaren Code der gedruckten Hardcopy (21) encodiert ist, um die Authentizität der decodierten zugehörigen Daten zu prüfen, und der maschinenlesbare Code ermöglicht eine Überprüfung der Authentizität der gedruckten Hardcopy (21) des ursprünglichen digitalen Dokuments durch einen Vergleich von Daten in der gedruckten Hardcopy (21) mit den aus dem maschinenlesbaren Code decodierten und überprüften zugehörigen Daten; und
- ein Aufzeichnen (17) des maschinenlesbaren Codes auf einer geschützten digitalen Version des ursprünglichen digitalen Dokuments.

9. Prozess zum Überprüfen der Authentizität einer gedruckten Hardcopy eines ursprünglichen digitalen Dokuments, wobei der Prozess aufweist:
- ein Empfangen (21) einer gedruckten Hardcopy des ursprünglichen digitalen Dokuments, das einen maschinenlesbaren Code enthält, in dem ein asymmetrisch verschlüsselter Hash von zugehörigen Daten des ursprünglichen digitalen Dokuments und die zugehörigen Daten encodiert sind, wobei die zugehörigen Daten zumindest teilweise Daten aufweisen, die auf dem ursprünglichen digitalen Dokument sichtbar sind;
- ein Maschinenlesen (22) der gedruckten Hardcopy;
- ein Decodieren (23) der zugehörigen Daten aus dem maschinenlesbaren Code; und
- ein Überprüfen (24 bis 30), ob die zugehörigen Daten authentisch sind, indem der Hash aus den zugehörigen Daten, die aus dem maschinenlesbaren Code decodiert werden, reproduziert wird, und indem der mit dem verschlüsselten Hash reproduzierte Hash, der in dem maschinenlesbaren Code encodiert ist, verglichen wird, und indem dadurch überprüfte zugehörige Daten, die aus dem maschinenlesbaren Code decodiert werden, im Fall einer Übereinstimmung zwischen dem reproduzierten Hash und dem verschlüsselten Hash erhalten werden, der in dem maschinenlesbaren Code encodiert ist;
- ein Vergleichen (31) der überprüften zugehörigen Daten, die aus dem maschinenlesbaren Code decodiert werden, mit Daten, die aus der gedruckten Hardcopy des Dokuments extrahiert werden, um damit die gedruckte Hardcopy im Fall einer Übereinstimmung zwischen den überprüften zugehörigen Daten, die aus dem maschinenlesbaren Code decodiert werden, und den Daten zu authentifizieren, die aus der gedruckten Hardcopy extrahiert werden.

10. Prozess zum Überprüfen der Authentizität einer gedruckten Hardcopy eines ursprünglichen digitalen Dokuments nach Anspruch 9, **DADURCH GEKENNZEICHNET, DASS** der Schritt des Überprüfens (24 bis 30), ob die zugehörigen Daten authentisch sind, aufweist:
- ein Decodieren (25) des asymmetrisch verschlüsselten Hash der zugehörigen Daten aus dem maschinenlesbaren Code, um damit einen decodierten asymmetrisch verschlüsselten Hash zu erhalten;
- ein Entschlüsseln (26 bis 27) des decodierten asymmetrisch verschlüsselten Hash mit einem öffentlichen Schlüssel, der dem privaten Schlüssel des Signierers zugehörig ist, um damit einen entschlüsselten Hash zu erhalten;
- ein Generieren (24) eines Hash aus den zugehörigen Daten, die aus dem maschinenlesbaren Code decodiert werden; und
- ein Vergleichen (28) des entschlüsselten Hash mit dem Hash, der aus den zugehörigen Daten generiert wird, die aus dem maschinenlesbaren Code decodiert werden, um damit die Authentizität der zugehörigen Daten zu überprüfen, die aus dem maschinenlesbaren Code decodiert werden.

11. Prozess zum Überprüfen der Authentizität einer gedruckten Hardcopy eines ursprünglichen digitalen Dokuments nach Anspruch 9, **DADURCH GEKENNZEICHNET, DASS** ein Maschinenlesen der gedruckten Hardcopy unter Verwendung von einem von Folgendem erfolgt:
- einem Desktop-Scanner;
- einer Fotokamera;
- einem Strichcode-Scanner.

12. Prozess zum Überprüfen der Authentizität einer gedruckten Hardcopy eines ursprünglichen digitalen Dokuments nach Anspruch 9, **DADURCH GEKENNZEICHNET, DASS** der Prozess ferner aufweist:
- ein Aufzeigen von Unterschieden zwischen den zugehörigen Daten, die aus dem maschinenlesbaren Code decodiert werden, und Daten, die aus der gedruckten Hardcopy des ursprünglichen digitalen Dokuments extrahiert werden.

13. Prozess zum Überprüfen der Authentizität einer gedruckten Hardcopy eines ursprünglichen digitalen Dokuments nach Anspruch 12, **DADURCH GEKENNZEICHNET, DASS** der Prozess ferner aufweist:
- ein Bestimmen und Aufzeigen eines Bestätigungsgrads zwischen den zugehörigen Daten, die aus dem maschinenlesbaren Code decodiert werden, und Daten, die aus der gedruckten Hardcopy des ursprünglichen digitalen Dokuments extrahiert werden.

14. Prozess zum Überprüfen der Authentizität einer gedruckten Hardcopy eines ursprünglichen digitalen Dokuments nach Anspruch 9, **DADURCH GEKENNZEICHNET, DASS** der Prozess ferner aufweist:
- ein Stellen von Fragen in Bezug auf das ursprüngliche digitale Dokument an einen Anwender;
- ein Erhalten von Antworten auf die Fragen von dem Anwender; und
- ein Überprüfen der Antworten im Vergleich mit den zugehörigen Daten, die aus dem maschinenlesbaren Code decodiert werden.

15. Prozess zum Überprüfen der Authentizität einer gedruckten Hardcopy eines ursprünglichen digitalen Dokuments nach Anspruch 9, **DADURCH GEKENNZEICHNET, DASS** der Prozess ferner aufweist:
- ein Generieren einer Authentizitätsbewertung aus dem Vergleich zwischen den zugehörigen Daten, die aus dem maschinenlesbaren Code decodiert werden, und den Daten, die aus der gedruckten Hardcopy des ursprünglichen digitalen Dokuments extrahiert werden.

## Revendications

1. Dispositif de protection d'un document numérique original, ledit dispositif comprenant :
- un moyen de réception de document destiné à recevoir (11) ledit document numérique original ;
- un moyen de réception de données associées destiné à recevoir (12) des données associées comprenant au moins partiellement des données visibles sur ledit document numérique original ;
- un moyen de hachage destiné à créer (13) un hachage desdites données associées ;
- un moyen de signature numérique destiné à encrypter (15) de manière asymétrique ledit hachage avec une clé privée pour générer de la sorte des données signées numériquement ;
- un moyen d'encodage destiné à générer (16) un code lisible par machine contenant ledit hachage encrypté de manière asymétrique pour signer avec celui-ci au moins une partie des données dans ledit document numérique, ledit moyen d'encodage étant adapté pour encoder dans ledit code lisible par machine également lesdits données associées de manière à ce que ledit hachage puisse être reproduit à partir des données associées décodées dans un code lisible par machine d'une copie papier imprimée (21) dudit document numérique original et servir de comparaison avec le hachage encrypté encodé dans ledit code lisible par machine de ladite copie papier imprimée (21) pour vérifier l'authenticité desdites données associées décodées, et ledit code lisible par machine permet la vérification de l'authenticité de ladite copie papier imprimée (21) dudit document numérique original par le biais d'une comparaison (31) des données dans ladite copie papier imprimée auxdites données associées décodées (23) à partir dudit code lisible par machine et vérifié (24 à 30) ;
- un moyen d'enregistrement destiné à enregistrer (17) ledit code lisible par machine sur une version numérique protégée dudit document numérique original.

2. Dispositif de protection d'un document numérique original selon la revendication 1, dans lequel ledit moyen d'encodage est en outre adapté pour encoder dans ledit code lisible par machine une référence à une clé publique ou un certificat associé.

3. Dispositif de protection d'un document numérique original selon la revendication 1, **CARACTÉRISÉ EN CE QUE** ledit code lisible par machine est l'un ou plusieurs parmi :
- un code-barres ;
- un code-barres 2D ;
- un code holographique ;
- une piste magnétique ;
- un code infoglyphique ;
- un code micropoints ;
- un code serpentin ;
- un filigrane ;
- une étiquette RFID ;
- une URL ;
- une séquence alphanumérique utilisant la reconnaissance optique de caractères, OCR;
- un code par encre magnétique ;
- un code de couleur ;
- un code invisible à l'homme.

4. Dispositif de protection d'un document numérique original selon la revendication 1, **CARACTÉRISÉ EN CE QUE** lesdites données extraites dudit document numérique original comprend l'un ou plusieurs parmi :
- des données sur le côté dudit document numérique original ;
- des données identifiées par des marqueurs dans ledit document numérique original ;
- des données à un emplacement prédéfini dans ledit document numérique original.

5. Dispositif de protection d'un document numérique original selon la revendication 1, **CARACTÉRISÉ EN CE QUE** ledit dispositif est intégré dans une application logicielle de génération de document.

6. Dispositif de protection d'un document numérique original selon la revendication 1, **CARACTÉRISÉ EN CE QUE** ledit dispositif est intégré dans un pilote d'imprimante.

7. Dispositif de protection d'un document numérique original selon la revendication 1, **CARACTÉRISÉ EN CE QUE** ledit dispositif comprend en outre un ou plusieurs parmi ce qui suit :
- un moyen d'encodage dans ledit code lisible par machine d'un horodatage ;
- un moyen d'encodage dans ledit code lisible par machine d'une référence indicatrice de la façon selon laquelle lesdites données associées doivent être présentées à un utilisateur ;
- un moyen d'encodage dans ledit code lisible par machine de données non-présentes sous forme lisible par l'homme dans ledit document numérique original ;
- un moyen d'encodage dans ledit code lisible par machine de données non-signées telles qu'une référence audit document numérique original ;
- un moyen d'encodage dans ledit code lisible par machine d'un niveau de correspondance requis avant qu'une copie papier ne soit jugée authentique ;
- un moyen d'encodage dans ledit code lisible par machine d'informations indicatrices d'opérations qui ont été appliquées auxdites données associées comme une compression et un encodage requis pour vérifier lesdites données associées ;
- un moyen d'encodage dans ledit code lisible par machine de la signature numérique du document numérique original.

8. Procédé de protection d'un document numérique original, ledit procédé comprenant :
- la réception (11) dudit document numérique original ;
- la réception (12) de données associées comprenant au moins partiellement des données visibles sur ledit document numérique original ;
- la création (13) d'un hachage desdites données associées ;
- l'encryptage asymétrique (15) dudit hachage avec une clé privée pour générer de la sorte des données signées numériquement ;
- la génération (16) d'un code lisible par machine contenant ledit hachage encrypté de manière asymétrique pour signer avec celui-ci au moins une partie des données dans ledit document numérique original et contenant également lesdites données associées de manière à ce que ledit hachage puisse être reproduit à partir des données associées décodées dans un code lisible par machine d'une copie papier imprimée (21) dudit document numérique original et servir de comparaison avec le hachage encrypté encodé dans ledit code lisible par machine de ladite copie papier imprimée (21) pour vérifier l'authenticité desdites données associées décodées, et ledit code lisible par machine permet la vérification de l'authenticité de ladite copie papier imprimée (21) dudit document numérique original par le biais d'une comparaison de données dans ladite copie papier imprimée (21) auxdites données associées décodées à partir dudit code lisible par machine et vérifié ; et
- l'enregistrement (17) dudit code lisible par machine sur une version numérique protégée dudit document numérique original.

9. Procédé de vérification de l'authenticité d'une copie papier imprimée d'un document numérique original, ledit procédé comprenant :
- la réception (21) d'une copie papier imprimée dudit document numérique original contenant un code lisible par machine dans lequel un hachage encrypté de manière asymétrique de données associées du document numérique original et lesdites données associées sont encodées, lesdites données associées comprenant au moins partiellement des données visibles sur ledit document numérique original ;
- la lecture par machine (22) de ladite copie papier imprimée ;
- le décodage (23) desdites données associées à partir dudit code lisible par machine ; et
- la vérification (24 à 30) si lesdites données associées sont authentiques en reproduisant ledit hachage à partir desdites données associées décodées à partir dudit code lisible par machine et en comparant ledit hachage reproduit audit hachage encrypté encodé dans ledit code lisible par machine, et pour obtenir de la sorte des données associées vérifiées décodées à partir dudit code lisible par machine en cas de correspondance entre ledit hachage reproduit et ledit hachage encrypté encodé dans ledit code lisible par machine ;
- la comparaison (31) desdites données associées vérifiées décodées à partir dudit code lisible par machine à des données extraites à partir de ladite copie papier imprimée dudit document pour authentifier de la sorte ladite copie papier imprimée en cas de correspondance entre lesdites données associées vérifiées décodées à partir dudit code lisible par machine et lesdites données extraites à partir de ladite copie papier imprimée.

10. Procédé de vérification de l'authenticité d'une copie papier imprimée d'un document numérique original selon la revendication 9, **CARACTÉRISÉ EN CE QUE** ladite étape de vérification (24 à 30) si lesdites données associées sont authentiques comprend :
- le décodage (25) dudit hachage encrypté de manière asymétrique desdites données associées à partir dudit code lisible par machine pour obtenir de la sorte un hachage encrypté de manière asymétrique décodé ;
- le décryptage (26 à 27) dudit hachage encrypté de manière asymétrique décodé avec une clé publique associée à la clé privé des signataires pour obtenir de la sorte un hachage décrypté ;
- la génération (24) d'un hachage à partir desdites données associées décodées à partir dudit code lisible par machine ; et
- la comparaison (28) dudit hachage décrypté audit hachage généré à partir desdites données associées décodées à partir dudit code lisible par machine pour vérifier de la sorte l'authenticité desdites données associées décodées à partir dudit code lisible par machine.

11. Procédé de vérification de l'authenticité d'une copie papier imprimée d'un document numérique original selon la revendication 9, **CARACTÉRISÉ EN CE QUE** la lecture par machine de ladite copie papier imprimée s'effectue en utilisant l'un de ce qui suit :
- un scanner de bureau ;
- un appareil photo ;
- un scanner de code-barres.

12. Procédé de vérification de l'authenticité d'une copie papier imprimée d'un document numérique original selon la revendication 9, **CARACTÉRISÉ EN CE QUE** ledit procédé comprend en outre :
- la représentation de différences entre lesdites données associées décodées à partir dudit code lisible par machine et les données extraites à partir de ladite copie papier imprimée dudit document numérique original.

13. Procédé de vérification de l'authenticité d'une copie papier imprimée d'un document numérique original selon la revendication 12, **CARACTÉRISÉ EN CE QUE** ledit procédé comprend en outre :
- la détermination et la représentation d'un niveau de corroboration entre lesdites données associées décodées à partir dudit code lisible par machine et les données extraites à partir de ladite copie papier imprimée dudit document numérique original.

14. Procédé de vérification de l'authenticité d'une copie papier imprimée d'un document numérique original selon la revendication 9, **CARACTÉRISÉ EN CE QUE** ledit procédé comprend en outre :
- la pose de questions concernant ledit document numérique original à un opérateur ;
- la réception de réponses auxdites questions depuis ledit opérateur ; et
- la vérification desdites réponses par rapport auxdites données associées décodées à partir dudit code lisible par machine.

15. Procédé de vérification de l'authenticité d'une copie papier imprimée d'un document numérique original selon la revendication 9, **CARACTÉRISÉ EN CE QUE** ledit procédé comprend en outre :
- la génération d'un score d'authenticité à partir de la comparaison entre lesdites données associées décodées à partir dudit code lisible par machine et lesdites données extraites à partir de ladite copie papier imprimée dudit document numérique original.
